# EUROPEAN PATENT APPLICATION

(11) **EP 2 551 473 A1**
(43) Date of publication of application: **30.01.2013**
(21) Application number: 12176627.3
(22) Date of filing: 17.07.2012
(51) Int. Cl.: F01D 25/24

(54) **Device for the mutual fixation of two gas turbine casing components**

(30) Priority: 27.07.2011 EP 11175616
(71) Applicant: Alstom Technology Ltd, 5400 Baden (CH)
(72) Inventor: Baldischweiler, Peter, 5425 Schneisingen (CH); Wunderle, Helmar, 79761 Waldshut-Tiengen (DE); Rauch, Marc, 8105 Regensdorf (CH)

(57) **Abstract**

The invention refers to a device for the mutual fixing of two components (24, 25) - which are interconnected via a flanged joint (18a, b) - for preventing a relative movement of the components (24, 25) in relation to each other in the connecting plane of the flanged joint (18a, b), which device comprises a key (21) which engages in both components (24, 25) in a form-fitting manner in the region of the flanged joint (18a, b).

A simplified and flexible application is achieved by the key (21) being guided in one of the components (24, 25) by means of a precision fit, whereas in the other of the components (24, 25) the form fit can be adjusted by adding shims (22, 23).

## Description

### Technical field

The present invention refers to a device for the mutual fixing of two components according to the preamble of claim 1. It also refers to the use of such a device in a gas turbine.

### Background of the invention

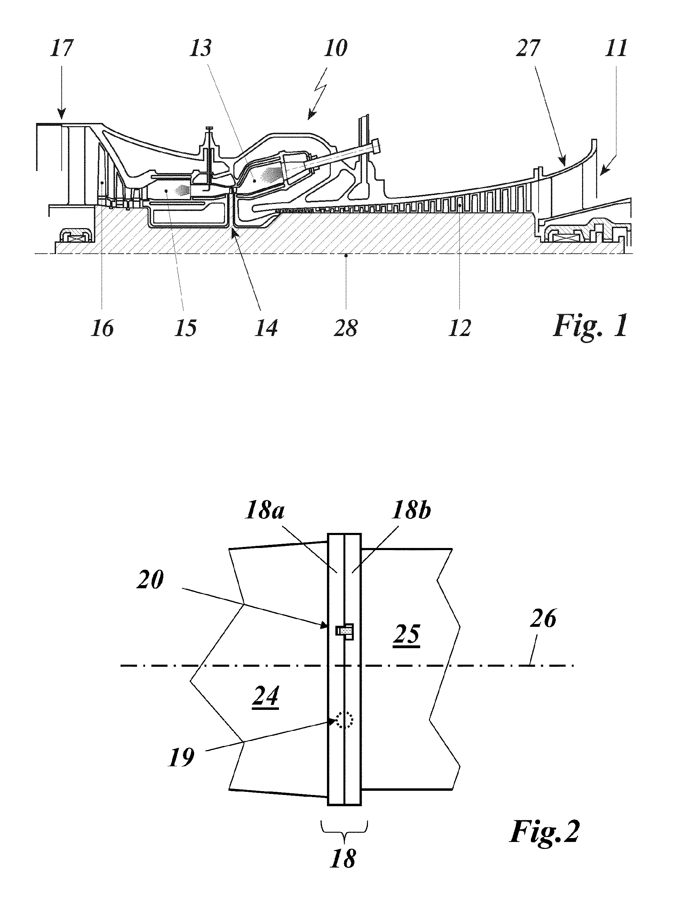

Shown in Fig. 1, in a perspective, partially sectioned view, is the construction of a stationary gas turbine (in the example, GT26 type with sequential combustion). The gas turbine 10, which extends along a machine axis 28, comprises a compressor 12, which via an air inlet 11 inducts and compresses combustion air, a subsequent first combustion chamber 13, a first turbine 14 which is arranged downstream of the first combustion chamber 13, a second combustion chamber 15, and a second turbine 16 which is arranged downstream of the second combustion chamber 15. The exhaust gas which discharges from the second turbine 16 leaves the turbine through an exhaust housing 17.

The individual functional units of the gas turbine 10 are enclosed by a casing 27 which is assembled from a plurality of sections along the machine axis 28 and interconnected by means of vertical flanges. Since during operation of the gas turbine 10 thermal stresses occur on the casing 27, which can lead to a non-tolerable mutual displacement of the sections, so-called round keys, as are known from printed publications DE 19803898 A1 or EP 1275863 A2, for example, are installed in the region of the flanged joints (vertical flanges) for the mutual fixing of the sections.

The round keys are arranged in the vertical flanges in radial holes, the axes of which lie essentially in the connecting plane of the flanged joint. The holes for the round keys are drilled during assembly and the round keys installed. The form-fit connection by means of the round key guarantees the relative position of the adjoining components in relation to each other. An uncontrolled displacement of the components, which is caused by varying thermal expansion during operation (on account of different materials), is therefore prevented.

However, this previously used type of fixing has disadvantages:
- The necessary machining of the components can only be carried out during assembly. A premachining is not possible.
- Very accurate machining is required, as a rule with the quality specified by standard ISO H7.
- The machining is difficult in the case of adjoining components consisting of different material. Different strengths of the materials promote "wandering" of the hole when being drilled.
- Large processing machines and additional drilling jigs are required (in the case of a stationary gas turbine).
- A dependency exists between the adjoining components. The exchange of a component requires renewed machining.
- The round keys are locally heavily stressed. High surface pressure is created.

### Summary of the invention

It is therefore an object of the invention to create a generic-type device which avoids the disadvantages of previously used devices and is distinguished particularly by a simple and flexible application.

This and further objects are achieved by means of a device according to claim 1.

The device according to the invention for the mutual fixing of two components - which are interconnected via a flanged joint - for preventing a relative movement of the components in relation to each other in the connecting plane of the flanged joint, comprises a key which engages in both components in a form-fitting manner in the region of the flanged joint. The device is characterized in that the key is guided in one of the components by means of a precision fit, whereas in the other of the components the form fit can be adjusted by adding shims.

One embodiment of the device according to the invention is characterized in that in the one component provision is made for a first recess for the precision-fit seating of the key, and in that in the other component provision is made for a second recess which accommodates the key with a clearance parallel to the connecting plane of the flanged joint.

Another embodiment is characterized in that the key is arranged on the outer periphery of the flanged joint.

A further embodiment is distinguished by the flanged joint being formed concentrically to an axis, and by the key extending between the components in the axial direction.

According to the invention, the device according to the invention is used in a gas turbine which has a casing extending along a machine axis and assembled from a plurality of sections which are arranged axially in series and interconnected in each case by a vertical flanged joint.

### Brief explanation of the figures

The invention shall subsequently be explained in more detail based on exemplary embodiments in conjunction with the drawing. In the drawing
- Fig. 1: shows in a partially sectioned, perspective view a stationary gas turbine with sequential combustion, as is suitable for application of the invention;
- Fig. 2: shows in a side view a concentric flanged joint with an adjustable key device according to an exemplary embodiment of the invention and (for comparison) a conventional round key, and
- Fig. 3: shows in a number of sub-figures the installation of an adjustable key according to an exemplary embodiment of the invention in a flanged joint of the type shown in Fig. 2.

### Ways of implementing the invention

An essential element of the inventive idea is the installation of adjustable keys in components which are to be connected, which keys are delivered in an already finish-machined state. After assembly of the components, adjustable keys are installed. These keys are guided in one of the components by means of a precision fit and on the adjacent component are adjusted by shims.

During assembly, no additional machining is necessary. The components can be replaced without any difficulty; only the keys have to be readjusted.

The surface areas which are acted upon by forces are larger than in the case of round keys, which allows the transfer of greater forces.

Fig. 2 shows an exemplary flanged joint 18, which is formed concentrically to an axis 26, between two adjoining components 24 and 25. Such a flanged joint for example connects the individual sections of the casing 27 of the gas turbine 10 from Fig. 1.

According to the previous solution, round keys 19 (shown by a dotted line in Fig. 2) were inserted for the relative fixing of the two flanges 18a and 18b in relation to each other, which round keys engage in a form-fitting manner in both flanges 18a and 18b and are arranged in a radial hole. This type of fixing has the disadvantages listed in the introduction.

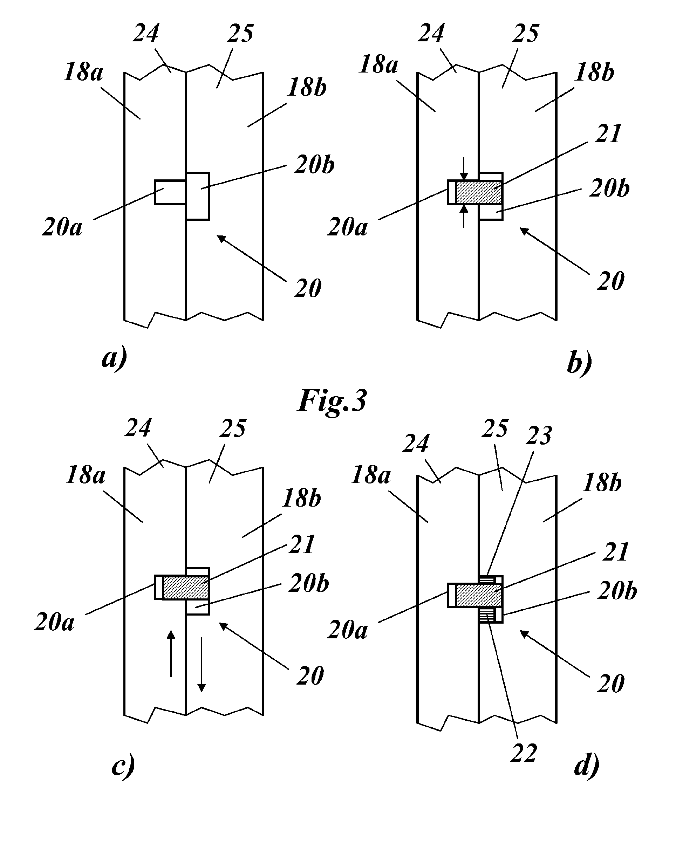

According to the invention, an adjustable key device 20 is now used instead, the installation of which is illustrated in detail in Fig. 3. According to Fig. 3 a), components 24 and 25 are delivered for assembly, the flanges 18a and 18b of the components already being provided with recesses 20a, b in each case for accommodating an adjustable key. The one recess 20a in this case is designed in terms of its dimensions so that it accommodates the key (21 in Fig. 3 b)) with the desired fit (arrows in Fig. 3 b)). The other recess 20b, in contrast, is dimensioned so that with the key 21 inserted the associated component 25 can be displaced or rotated in the circumferential direction in relation to the other component 24, as is shown in Fig. 3c).

If the desired relative positioning of the two components 24 and 25 in relation to each other is achieved, then according to Fig. 3c) the key 21 is also fixed in the other recess 20b by corresponding shims 22, 23 being inserted, as is gathered from Fig. 3d). The shims may consist of thin plates or small plates 22, 23, for example, which are inserted successively into the gaps between the key 21 and the circumferentially delimiting walls of the recess 20b until the desired fit is achieved.

If, for example, one of the components 24, 25 is exchanged, a new fixing can be achieved in a simple manner by the shims 22 and 23 being exchanged or modified. Remachining of the components is not necessary in this case.

### List of designations

- 10: Gas turbine (e.g. type GT26)
- 11: Air inlet
- 12: Compressor
- 13, 15: Combustion chamber
- 14, 16: Turbine
- 17: Exhaust housing
- 18: Flanged joint
- 18a, b: Flange
- 19: Round key
- 20: Adjustable key device
- 20a, b: Recess
- 21: Key
- 22, 23: Shim
- 24, 25: Component
- 26: Axis of the flanged joint
- 27: Casing
- 28: Machine axis

## Claims

1. A device for the mutual fixing of two components (24, 25) - which are interconnected via a flanged joint (18) - for preventing a relative movement of the components (24, 25) in relation to each other in the connecting plane of the flanged joint (18), which device comprises a key (21) which engages in both components (24, 25) in a form-fitting manner in the region of the flanged joint (18), **characterized in that** the key (21) is guided in one of the components (24, 25) by means of a precision fit, whereas in the other of the components (24, 25) the form fit can be adjusted by adding shims (22, 23).

2. The device as claimed in claim 1, **characterized in that** the key (21) is guided parallel or virtually parallel to the axis (26) which is associated with the flanged joint (18).

3. The device as claimed in claim 1 or 2, **characterized in that** in the one component (24) provision is made for a first recess (20a) for the precision-fit seating of the key (21), and **in that** in the other component (25) provision is made for a second recess (20b) which accommodates the key (21) with a clearance parallel to the connecting plane of the flanged joint (18).

4. The device as claimed in one of claims 1 to 3, **characterized in that** the key (21) is arranged on the outer periphery of the flanged joint (18).

5. The device as claimed in one of claims 1 to 4, **characterized in that** the flanged joint (18) is formed concentrically to an axis (26), and **in that** the key (21) extends between the components (24, 25) in the axial direction.

6. The use of the device, as claimed in one of claims 1 to 5, in a gas turbine (10) which has a casing (27) extending along a machine axis (28) and assembled from a plurality of sections which are arranged axially in series and interconnected in each case by a vertical flanged joint.
